# EUROPÄISCHE PATENTANMELDUNG

(11) **EP 1 491 278 A2**
(43) Veröffentlichungstag der Anmeldung: **29.12.2004**
(21) Anmeldenummer: 04012909.0
(22) Anmeldetag: 01.06.2004
(51) Int. Cl.: B23K 9/09, B23K 9/173

(54) **Schutzgase und Verfahren zum Metall-Schutzgas-Fügen mit wechselnder Polarität**

(30) Priorität: 26.06.2003 DE 10328968
(71) Anmelder: Linde Aktiengesellschaft, 65189 Wiesbaden (DE)
(72) Erfinder: Miklos, Ernst, 85551 Kirchheim (DE)
(74) Vertreter: Zahn, Christoph

(57) **Zusammenfassung**

Die Erfindung betrifft Schutzgase zum MSG-AC-Fügen. Das erste Gas ist durch Argon, Helium und 0,001 bis 0,1% O₂, CO₂, N₂, NO oder N₂O kenngezeichnet. Das zweite Gas ist durch Argon und/oder Helium und bis 0,1 bis 12% O₂ und/oder CO₂ kenngezeichnet. Die Erfindung betrifft weiter ein Verfahren zum Metall-Schutzgas-Fügen mit wechselnder Polarität und abschmelzender Elektrode (MSG-AC). Zum Verbessern der Prozessstabilität und der Arbeitsgeschwindigkeit wird ein Schutzgas verwendet, welches Helium oder Argon mit keinem Helium und mit mindestens eines der Gase O₂, CO₂, N₂, NO oder NO₂ enthält.

## Beschreibung

Die Erfindung betrifft ein Verfahren zum Metall-Schutzgas-Fügen mit wechselnder Polarität und abschmelzender Elektrode (MSG-AC).

Das Metall-Schutzgas-Fügen umfasst das Verbinden von Metallen durch Schweißen, Löten oder Kombinationen dieser Verfahren unter Schutzgas. Das Metall-Schutzgas-Schweißen (MSG-Schweißen) ist seit Jahren das überwiegend eingesetzte Verfahren zum Fügen metallischer Werkstoffe und in der ISO 857 definiert und beschrieben. Im Wesentlichen wird in einem Lichtbogen, der zwischen einer abschmelzenden Elektrode und einem oder mehreren Werkstücken brennt, Zusatzwerkstoff eingebracht. Dabei entsteht eine Verbindung mit dem Grundwerkstoff, der ebenfalls aufgeschmolzen wird. Je nach eingesetztem Schutzgas wird unterschieden zwischen MIG-Schweißen (mit inertem Gas) oder MAG-Schweißen (mit aktivem Gas). Die Schutzgasauswahl richtet sich nach den zu schweißenden Werkstoffen.

Als Variante des MSG-Prozesses wird seit einigen Jahren auch das MSG (MIG und MAG)-Löten praktiziert. Hier wird eine Drahtelektrode mit niedrigem Schmelzpunkt verwendet. Das Ziel ist eine Lötverbindung mit möglichst keiner oder nur geringer Aufschmelzung des Grundwerkstoffes. Neueste Entwicklungen versuchen auch eine Kombination beider Prozesse, z.B. Verbinden von Aluminiumwerkstoffen mit beschichteten Stahlblechen, wobei zur einen Werkstoffseite hin ein Lötprozess vorherrscht, und zur anderen .ein Schweißprozess. All diese Prozesse werden mit Gleichstrom -auch gepulstem Gleichstrom, kurz DC - durchgeführt. Ein Beispiel dafür ist in der EP 1 129 808 A1 beschrieben. Bei den meisten Anwendungen ist die abschmelzende Elektrode plus-gepolt und der Grundwerkstoff minus gepolt. Diese Art der Polung gewährleist ein ausreichendes Einschnüren der flüssig-teigigen Metallschmelze der Elektrode über die sogenannte "Pinch-Kraft". Bei Prozessen mit Impulsstrom (MSGp) ist dies Bedingung für einen regelmäßigen und reproduzierbaren Werkstoffübergang. Auf der Grundwerkstoffseite bewirkt die Minuspolung eine Elektronenemission, die entweder flächenmäßig oder über wandernde Punkte zur Erhitzung und zum Aufschmelzen des Metalls beiträgt. In wenigen Ausnahmefällen wird auch mit minusgepolter abschmelzender Elektrode gearbeitet. Es handelt sich hierbei um spezielle Anwendungen wie das Auftragsschweißen oder das Schweißen mit bestimmten Fülldrähten.

Seit einigen Jahren wird auch versucht, den Zusatzwerkstoff mit wechselnder Polarität abschmelzen zu lassen, siehe EP 1 103 329 A2 oder IIW-Dokument-No. XII-1720-02 vom Mai 2002.

Als Vorteile dieses Prozesses werden erwähnt: Besseres Vorwärmen der Drahtelektrode während der Minus-gepolten Phase und dadurch höhere Abschmelzleistung, bessere Spaltüberbrückbarkeit bei dünnen Bauteilen und MSG-Schweißbarkeit von so dünnen Blechen, wie es bisher nicht möglich war. Aufgrund dieser Vorteile findet der neue Prozess besonders in der Automobilindustrie viel Beachtung. Zur Zeit sind bereits zwei verschieden Gerätetypen am Markt erhältlich, mit weiteren Anbietern wird demnächst gerechnet. In Forschungsgremien und Instituten wird dem MSG-AC-Prozess ein weitreichendes Potential zugesagt. Bei folgenden Prozess/Werkstoffkombinationen wird besonders optimistisch weiterentwickelt:
- AC-MIG-Schweißen von Aluminiumlegierungen
- AC-MSG-Löten von beschichteten und unbeschichteten Stahl
- AC-MAG-Schweißen von dünnen Stahlblechen
- AC-MSG-Fügen ("Löt-Schweißen") von Aluminium mit beschichtetem und unbeschichtetem Stahlblech
- AC-MSG-Schweißen von hitzeempfindlichen Werkstoffen
- AC-MSG-Auftragsschweißen

Man erwartet durch den Einsatz der AC Technik eine deutliche Verbesserung der Abschmelzleistung ohne Vergrößerung des Wärmeeintrages in den Grundwerkstoff, eine bessere Spaltüberbrückbarkeit und die Möglichkeit des Einsatzes von förderstabileren Drahtelektroden mit größerem Durchmesser.

Wie in den bisherigen Veröffentlichungen nachzulesen ist, wurden bisher bei den Anwendungen der AC-Technik nur die vom typischen DC-Prozess bekannten Gase eingesetzt. Eine Untersuchung des Einflusses der Schutzgase beim AC-MSG-Schweißen und Löten ist nicht bekannt.

Es ist bekannt, dass ein relativ kalter Lichtbogen, also eine geringe Wärmeeinbringung in den Grundwerkstoff, auch Nachteile mit sich bringt. Das Benetzungsverhalten ist schlecht und es kommt zu Überwölbungen der Naht. Die sehr schmale Naht kann sich wiederum negativ auf die Spaltüberbrückbarkeit auswirken. Eine überwölbte Naht bedeutet bei dynamisch belasteten Teilen auch eine geometrische Kerbe mit entsprechend negativen Auswirkungen auf die Lebensdauer des Bauteiles. Bei Werkstoffen, die zu Porenbildung neigen, wie z.B. Aluminium-Legierungen, nimmt die Porenhäufigkeit zu, weil die Gase in der schnell abkühlenden Schmelze eingefroren werden. Wird keine ausreichende Benetzung/Aufschmelzung an der Oberfläche der Bauteile erreicht, kommt es zu Ausschussteilen, bedingt durch Bindefehler (Wurzel-, Flanken-, Zwischenlagen). Mit der Zielsetzung der Produktivitätssteigerung in der heutigen modernen Fertigung werden die Fügegeschwindigkeiten ständig erhöht, eine Steigerung der Schweiß- oder Lötgeschwindigkeit führt aber zwangsläufig zu einer Verstärkung der genannten Nachteile. Der Hauptvorteil des AC-Prozesses, die geringe Wärmeeinbringung in den Grundwerkstoff, ist besonders bei vollmechanischen Roboter-Fügetechniken ein Nachteil im Hinblick auf mögliche Geschwindigkeiten.

Aufgabe der Erfindung ist es, einen MSG-AC-Prozess dahingehend zu verbessern, dass die Prozessstabilität, die Nahtqualität und die Arbeitsgeschwindigkeit erhöht werden.

Diese Aufgabe wird erfindungsgemäß gelöst von einem Verfahren mit den Merkmalen des Anspruchs 1. Ausgestaltungen der Erfindung sind Gegenstände von Unteransprüchen.

Über die gezielte Beimischung von Helium und / oder aktiven Gasen können die lichtbogenphysikalischen Vorgänge so beeinflusst werden, dass das Schweißen und/oder das Löten von metallischen Werkstoffen mit dem AC-MSG Prozess im Hinblick auf Prozessstabilität, Nahtqualität und mögliche Geschwindigkeiten wesentlich verbessert werden kann.

Neu ist die Erkenntnis, dass Helium-Anteile in der Phase der negativ gepolten Elektrode ein Wandern des Lichtbogenansatzpunktes entlang der Drahtelektrode erzwingt. Die Wirkung ist bei hohen Helium-Anteilen besonders stark, ist aber bereits ab 10 % Helium deutlich erkennbar. Gegen den Einsatz zu hoher Heliumanteile spricht der relativ hohe Preis des Heliums, deshalb werden Mischungen zwischen Argon oder einem anderen Inertgas (Edelgas) und Helium bevorzugt verwendet. So ist es günstig, 14-55 % Helium oder 25-35 % Helium, Rest Argon, als Schutzgas zu verwenden.

Die beim Arbeiten auftretenden Lichterscheinungen an der Kathode sind als Lichtquanten zu interpretieren, die dann entstehen, wenn entweder aus der Drahtoberfläche austretende Elektronen mit Gas-, Metall- oder Metalldampf-Ionen rekombinieren, oder wenn energetisch angeregte Teilchen an der Drahtoberfläche in einen Zustand geringerer Energie übergehen. Mit diesen Erscheinungen wird der Vorwärme-Effekt der Minus Polung beim AC-Fügen erklärt. Es ist also anzunehmen, dass mit dem Wandern des Lichtbogens hoch entlang des Drahtendes auch der Vorwärmeeffekt zunimmt. Dies bedeutet, dass mit Beimischung von Helium zum Schutzgas auch die Abschmelzleistung erhöht werden kann, da der höher vorgewärmte Draht leichter abzuschmelzen ist. Eine Erklärung, warum es zu diesem Wandern kommt, könnte die unterschiedliche lonisationsenergie von Argon (15,8 eV/Molekül) gegenüber Helium ( 24,6 eV/Molekül) bieten. Die schwerere Ionisation des Heliums führt zu einem Abfall der Anzahl der Ladungsträger im Lichtbogenraum. Da die Stromquellen aber bestrebt sind, entweder Lichtbogenlänge, Lichtbogenspannung oder Lichtbogenstrom konstant zu halten, kommt es zu einer erzwungenen zusätzlichen Elektronenemission aus dem negativ gepolten Draht. Ebenfalls ist der energetische Aufwand, Helium zu ionisieren, größer, was im Umkehrschluss bedeutet, dass bei der Rekombination mehr Energie freigesetzt wird.

In einer bevorzugten Ausführungsform enthält das Schutzgas eines oder mehrere der Gase O₂, CO₂, N₂, NO oder N₂O als zusätzliche Komponenten oder als Dotierung, bevorzugt im Bereich von 0,001 bis 0,1 %.

In einer weiteren bevorzugten Ausführungsform können diese Dotiergase in der Konzentration von 0,1 bis 5 %, also hochdotiert, dem Schutzgas zugegeben sein.

Weitere Varianten der Erfindung schlagen eine mittlere Dotierung, bei der zwischen 0,01 bis 3 % der genannten Dotiergase verwendet werden, oder eine sehr hohe Dotierung (5-12 %) der genannten Komponenten im Schutzgas vor.

Erfindungsgemäße Vorteile werden auch erreicht, wenn das Schutzgas kein Helium, aber Argon und mindestens eines der Gase O₂, CO₂, N2, NO oder N₂O enthält, bevorzugt 0,001 bis 0,1 %.

Ein Anspruch umfasst das Arbeiten mit einem Schutzgas aus Argon, Helium und 0,001 bis 0,1 % O₂, CO₂, N₂, NO oder N₂O.

Neu ist die Erkenntnis, dass Beimischungen von aktiven Gase-Komponenten, wie z. B. O₂, CO₂, N₂, N₂O, NO allein oder in Kombination, eine dem Helium entgegengesetzte Wirkung zeigen. So unterdrückt eine aktive Komponente, wie O₂, das Wandern des Lichtbogen-Ansatzpunkte hoch entlang der Drahtelektrode. Die beobachteten Lichterscheinungen konzentrieren sich auf den gebildeten flüssigen Tropfen, hier aber sind sie um so heftiger. Der Effekt konnte schon bei 0,03% O₂, bzw. 0,05% CO₂, bzw. 0,0275% NO, bzw. 0,02% N₂ in Argon oder Ar/He-Gemischen beobachtet werden. Eine Erklärung könnten die Unterschiede der erforderlichen Energien sein, die die notwendig zum Austritt der Elektronen aus einer Oberfläche sind. Bei Aluminium beträgt diese Energie 3,95 eV, beim Aluminium-Oxid nur 1,77 eV. Der im Schutzgas angeboten Sauerstoff reagiert sofort mit dem heißen Drahtende und bildet Aluminiumoxid. Die meiste Oxidmenge bildet sich dort, wo die Temperaturen am höchsten sind. Da nun hier die Elektronen wesentlich leichter austreten können als aus der "reinen" Aluminiumoberfläche, die ja auch noch kälter ist, wird der Lichtbogenansatzpunkt dort bleiben, wo er über den geringsten Widerstand den Strom fließen lassen kann, nämlich am Drahtende. Diese Wirkung führt zwangsläufig zu einer geringeren Erwärmung des freien Drahtendes und zu einer deutlichen Überhitzung des flüssigen Aluminiumtropfens. Hochgeschwindigkeitsaufnahmen deuten bei allen Versuchen mit aktiven Komponenten auf einen heißeren, flüssigeren Tropfen hin. Im Extremfall kommt es zu einer Explosion des Tropfens. Da der Unterschied zwischen der Elektronenaustrittsarbeit des Metalls und des entsprechenden Metall-Oxides auch bei anderen metallischen Werkstoffen und Legierungen existiert, gilt diese Theorie auch für diese Werkstoffe.

Mit dem Verständnis für die Wirkmechanismen der Schutzgaskomponenten ist es nun möglich, zusätzlich Einfluss zu nehmen auf den AC-MSG Fügeprozess. Über die Komponente Helium kann eine Ausbreitung der aktiven Kathodenfläche erzwungen werden, während aktive Komponenten wie O₂, CO₂, N₂, N₂O, NO, etc. eine Fokussierung dieser Fläche auf das freie Drahtende bewirken. In der Praxis stehen damit zusätzliche Einflussgrößen zur Verfügung, mit denen man eine anwendungsbezogene Optimierung vomehmen kann.

Beim Einsatz heliumhaltiger Gase war z.B. in Vergleichsversuchen an Aluminium immer eine höhere Schweißgeschwindigkeit möglich als unter Argon allein. Nahtoberfläche, Benetzung und Porenbild waren besser unter den heliumhaltigen Gasen (Argon-Helium Gemische, die die Linde AG unter dem Namen VARIGON He anbietet). Die Vorteile der geringen aktiven Gaskomponenten waren besonders dann offensichtlich, wenn mit geringen Werten der elektrischen Leistung gearbeitet wurde. Im unteren Leistungsbereich neigt der Lichtbogen dieses Prozessen zu einer Unruhe oder Instabilität. Diese kann durch die erwähnten Komponenten unterdrückt werden, was sich positiv auf die Nahtoberfläche, die Spritzreduzierung oder die Porenhäufigkeit etc. auswirkt. Ein wesentlicher Vorteil des Heliums bei allen MSG-AC-Prozessen ist der zusätzliche Wärmeeffekt, der aber nur oberflächlich wirkt. Somit kann trotz der charakteristischen und erwünschten geringen Wärmeeintragung des AC-Prozesses in den Grundwerkstoff eine gute Erwärmung an der Nahtoberfläche erreicht werden. Diese bewirkt die gute Benetzung an dem Nahtübergang und eine gute Entgasung der Schmelze. In der Phase der positiv gepolten abschmelzenden Elektrode wirkt sich Helium lichtbogenverbreitend aus, ein Effekt, welcher der Spaltüberbrückbarkeit dient und das "Durchfallen" bei einem breiteren Spalt verringert.

Versuche haben ergeben, dass sich für Aluminium besonders die Gasmischung des Anspruchs 1, reines Helium oder die Mischung des Anspruchs 2, Argon mit Helium, eignet. Versuche waren auch positiv mit der Gasmischung Argon, Helium und der Dotierung des Anspruchs 3 oder der des Anspruchs 7 (Argon ohne Helium, aber mit Dotierung).

Für das Schweißen von Stahl eignen sich die Gasmischungen des Anspruchs 1 und der Ansprüche 4,5 und 6 besonders gut. Für das MAG-Schweißen von Stahl eignet sich die Gasmischung des Anspruchs 3, wobei neben Argon 10 bis 90 % Helium und eine Dotierung mit O₂ oder CO₂ vorteilhaft ist.

Besonders gut für das Schweißen von Titan und Titanlegierungen, Magnesiumlegierungen, Nickelbasislegierungen eignen sich die Mischungen der Ansprüche 2, 3 oder 5.

Für das Auftragsschweißen eignen sich die Gasmischungen der Ansprüche 1, 2, 3 und 4.

Besonders günstig für das Fügen unterschiedlicher Werkstoffe (Schweißlöten oder Lötschweißen) sind die Gase des Anspruchs 1, des Anspruchs 2 oder des Anspruchs 3, also geringe Dotierungen in Argon und Helium.

Für das MSG-AC-Löten von artgleichen oder verschiedenen, beschichteten und/oder unbeschichteten Werkstoffen sind die Gase des Anspruchs 1, des Anspruchs 2 oder die dotierten Gase der Ansprüche 3, 5, 7, 8 und 9 vorteilhaft.

## Patentansprüche

1. Verfahren zum Metall-Schutzgas-Fügen mit wechselnder Polarität und abschmelzender Elektrode (MSG-AC), **dadurch gekennzeichnet, dass** ein Schutzgas verwendet wird, welches Helium enthält.

2. Verfahren nach Anspruch 1, **dadurch gekennzeichnet, dass** das Schutzgas 10 - 100 % Helium, bevorzugt 14 bis 55 % Helium, besonders bevorzugt 25 bis 35 % Helium, Rest Argon oder ein anderes Inertgas, enthält

3. Verfahren nach Anspruch 1 oder Anspruch 2, **dadurch gekennzeichnet, dass** das Schutzgas als Dotierungskomponente eines oder mehrere der Gase 02, C02, N2, NO oder N2O enthält, bevorzugt 0,001 bis 0,1 % davon.

4. Verfahren nach Anspruch 3, **dadurch gekennzeichnet, dass** das Schutzgas 0,1 bis 5 % der genannten Dotierungen enthält.

5. Verfahren nach Anspruch 3, **dadurch gekennzeichnet, dass** das Schutzgas 0,01 bis 3 % der genannten Dotierungen enthält.

6. Verfahren nach Anspruch 3, **dadurch gekennzeichnet, dass** das Schutzgas 3-12 %, bevorzugt 5-10 %, der genannten Dotierungen enthält.

7. Verfahren nach dem Oberbegriff des Anspruchs 1, **dadurch gekennzeichnet, dass** ein Schutzgas eingesetzt wird, welches kein Helium, aber Argon und mindestens eines der Gase O₂, CO₂, N₂, NO oder N₂O, bevorzugt in einer Menge von 0,001 bis 0,1 %, enthält.

8. Schutzgas zum MSG-AC-Fügen, **gekennzeichnet durch** Argon, Helium und 0,001 bis 0,1 % O₂, CO₂, N₂, NO oder N₂O.

9. Schutzgas zum MSG-AC-Fügen, **gekennzeichnet durch** Argon und/oder Helium und 0,1 bis 12 % O₂ und/oder CO₂.
